# EUROPEAN PATENT APPLICATION

(11) **EP 4 245 128 A1**
(43) Date of publication of application: **20.09.2023**
(21) Application number: 21891574.2
(22) Date of filing: 13.10.2021
(51) Int. Cl.: A01G 22/05, A01G 7/00

(54) **METHOD FOR CULTIVATING FRUIT-VEGETABLE PLANTS AND TOMATO FRUIT**

(30) Priority: 16.11.2020 JP 2020190529
(71) Applicant: FUJIFILM Corporation, Tokyo 106-8620 (JP)
(72) Inventor: HATTORI, Akiko, Ashigarakami-gun, Kanagawa 258-8577 (JP); HARA, Toshio, Ashigarakami-gun, Kanagawa 258-8577 (JP); HOSOKAWA, Takafumi, Ashigarakami-gun, Kanagawa 258-8577 (JP)
(74) Representative: Meissner Bolte Partnerschaft mbB
(86) International application number: PCT/JP2021/037932
(87) International publication number: WO 2022/102327

(57) **Abstract**

A method of cultivating a fruit vegetable plant, in which at least two parts of a plurality of ground parts generated from one plant seedling of the fruit vegetable plant are cultivated in different environments, and a tomato fruit.

## Description

### BACKGROUND OF THE INVENTION

### 1. Field of the Invention

The present invention relates to a method of cultivating a fruit vegetable plant and a tomato fruit.

### 2. Description of the Related Art

In cultivation of fruit and vegetable plants, control of a temperature condition in a cultivation environment is important from a viewpoint of improving quality of crops and year-round cultivation, and various temperature control methods have been suggested. For example, in JP5603669B, there is suggested a method of controlling a temperature condition of a plant by disposing a plurality of tubes in the vicinity of a plant within a predetermined range in a vertical direction in a greenhouse, and causing a heating fluid or a cooling fluid to flow in the plurality of tubes.

However, since a growth of plants cultivated in a greenhouse, a quantity and a quality of crops, and the like are affected by the climate and the weather, in recent years, an artificial light type plant factory that cultivates plants such as vegetables using an artificial light source such as LEDs (Light Emitting Diodes).

Cultivation of plants in the artificial light type plant factory is not affected by the climate and the weather, and a problem of labor shortage can be solved. Therefore, it is possible to cultivate plants throughout a year under certain conditions.

JP6444611B suggests a method of cultivating a plant in an artificial light type plant factory, which controls an irradiation light and a carbon dioxide concentration to promote the growth of the plant.

### SUMMARY OF THE INVENTION

By the way, plants cultivated in most plant factories in Japan are leafy vegetable plants such as lettuce, and the cultivation method suggested in JP6444611B mainly cultivates leafy vegetable plants. On the other hand, a method of cultivating a fruit vegetable plant in a plant factory has not yet been established, and a method of cultivating a fruit vegetable plant, which is suitable for cultivation in a plant factory and by which a high-quality harvested product (fruit) such as tomato can be harvested is required.

The present disclosure has been made in view of the above problems, and an object to be achieved thereof is to provide a method of cultivating a fruit vegetable plant, which is suitable for cultivation in a plant factory and by which a high-quality fruit can be harvested, and a tomato fruit which is harvested by the method of cultivating a fruit vegetable plant.
<1> A method of cultivating a fruit vegetable plant, in which at least two parts of a plurality of ground parts generated from one plant seedling of the fruit vegetable plant are cultivated in different environments.
<2> The method of cultivating a fruit vegetable plant according to <1>, in which the different environments differ in one or more conditions selected from temperature, relative humidity, light, carbon dioxide concentration, and air flow.
<3> The method of cultivating a fruit vegetable plant according to <1> or <2>, in which the plurality of ground parts of the fruit vegetable plant have a main branch and a side branch, and
   the main branch and at least one side branch are cultivated in different environments.
<4> The method of cultivating a fruit vegetable plant according to any one of <1> to <3>, in which the different environments include a fruit growth promoting environment at least including a fruit enlargement promoting environment, and a photosynthesis promoting environment,
   in the fruit enlargement promoting environment, one or more conditions selected from temperature, relative humidity, light, carbon dioxide concentration, and air flow are set as conditions suitable for promoting fruit growth of the fruit vegetable plant, and
   in the photosynthesis promoting environment, one or more conditions selected from temperature, relative humidity, light, carbon dioxide concentration, and air flow are set as conditions suitable for promoting photosynthesis of the fruit vegetable plant.
<5> The cultivation method according to <4>, in which a part of the fruit vegetable plant cultivated in the fruit growth promoting environment or the photosynthesis promoting environment is accommodated in an accommodation portion.
<6> The method of cultivating a fruit vegetable plant according to <4> or <5>, in which a light period temperature in the fruit enlargement promoting environment is different from a light period temperature in the photosynthesis promoting environment, and
   the light period temperature in the fruit enlargement promoting environment is 15°C to 25°C, and the light period temperature in the photosynthesis promoting environment is 25°C to 30°C.
<7> The method of cultivating a fruit vegetable plant according to any one of <4> to <6>, in which the plurality of ground parts of the fruit vegetable plant have two or more side branches,
   at least two of the main branches and the side branches are cultivated in the photosynthesis promoting environment, and
   in the photosynthesis promoting environment, a light-dark cycle of light irradiation is controlled, and at least one of the main branch or the side branch is allowed to stay in the light period.
<8> The method of cultivating a fruit vegetable plant according to any one of <4> to <7>, in which the plurality of ground parts of the fruit vegetable plant have two or more side branches, and
   at least two of the main branches and the side branches are cultivated in the fruit growth promoting environment.
<9> The method of cultivating a fruit vegetable plant according to any one of <4> to <8>, in which in the photosynthesis promoting environment, an area of a leaf contained in at least one of the main branch or the side branch is adjusted.
<10> The method of cultivating a fruit vegetable plant according to any one of <4> to <9>, in which in the photosynthesis promoting environment, flower buds contained in at least one of the main branch or the side branch are removed.
<11> The method of cultivating a fruit vegetable plant according to any one of <4> to <10>, wherein the fruit growth promoting environment further includes at least one of a flowering promoting environment or a fruit ripening environment,
   in the flowering promoting environment, one or more conditions selected from temperature, relative humidity, light, carbon dioxide concentration, and air flow are set as conditions suitable for promoting flowering of the fruit vegetable plant, and
   in the fruit ripening environment, one or more conditions selected from temperature, relative humidity, light, carbon dioxide concentration, and air flow are set as conditions suitable for ripening of a fruit of the fruit vegetable plant.
<12> The method of cultivating a fruit vegetable plant according to <11>, in which parts of the fruit vegetable plant cultivated in the fruit enlargement promoting environment, the flowering promoting environment, and the fruit ripening environment are accommodated in different accommodation portions.
<13> The method of cultivating a fruit vegetable plant according to any one of <1> to <12>, in which an artificial light irradiation device is used as a light source.
<14> The method of cultivating a fruit vegetable plant according to any one of <1> to <13>, in which the fruit vegetable plant is a Solanaceae family plant.
<15> The method of cultivating a fruit vegetable plant according to any one of <1> to <14>, in which the fruit vegetable plant is a tomato.
<16> A tomato fruit obtained by the method of cultivating a fruit vegetable plant according to <15>.
<17> The tomato fruit according to <16>, in which the tomato fruit contains 15 mg/100 g or more of lycopene and has a Brix sugar content of 5% by mass or more.

According to the present disclosure, the present invention has been made in view of the above problems, and an object to be achieved thereof is to provide a method of cultivating a fruit vegetable plant which is suitable for cultivation in a plant factory and by which a high-quality fruit can be harvested, and a tomato fruit which is harvested by the method of cultivating a fruit vegetable plant.

### BRIEF DESCRIPTION OF THE DRAWINGS

Fig. 1 is a schematic diagram for explaining an example of a fruit vegetable plant.
Figs. 2A to 2C are schematic diagrams for explaining an example of a method of cultivating a fruit vegetable plant of the present disclosure.
Figs. 3A to 3C are schematic diagrams for explaining another example of the method of cultivating a fruit vegetable plant of the present disclosure.
Figs. 4A to 4C are schematic diagrams for explaining another example of the method of cultivating a fruit vegetable plant of the present disclosure.

### DESCRIPTION OF THE PREFERRED EMBODIMENTS

Hereinafter, embodiments for carrying out the present disclosure will be described in detail. However, the present invention is not limited to the following embodiments. In the following embodiments, the components are not essential unless otherwise specified. The same applies to numerical values and ranges thereof, and does not limit the present disclosure.

In the present disclosure, the "ground part" means a part other than a root part generated from a plant seedling.

In the present disclosure, the "fruit vegetable plant" means a plant of which harvested product is a fruit.

In the present disclosure, the "side branch" means a branch having extended lateral buds generated from leaves of the main branch or a base of a stem, and a state of a plant having one or more side branches is referred to as a plurality of tailoring, one having one side branch is referred to as two tailoring, and one having two side branches is referred to as three tailoring.

In the present disclosure, "pinching" means picking a bud at a growth point of a fruit vegetable plant and stopping a growth of the stem.

In the present disclosure, "Brix sugar content" refers to a value in which a refractive index measured at 20°C using a sugar content meter or a refractometer is converted into % by mass of a sucrose solution based on a conversion table of the International Committee for the Unification of Sugar Analytical Methods (ICUMSA).

### (Method of cultivating fruit vegetable plant)

In the method of cultivating a fruit vegetable plant according to the present disclosure, at least two parts of a plurality of ground parts generated from one plant seedling of the fruit vegetable plant are cultivated in different environments.

The plant seedling having a plurality of ground parts may be obtained by cultivating seeds or the like by a known method in the related art, or may be purchased from a commercially available product.

The method of cultivating a fruit vegetable plant according to the present disclosure is suitable for cultivation in a plant factory, and according to the method of cultivating a fruit vegetable plant according to the present disclosure, a high-quality fruit can be harvested. The reason why the above effect is exhibited is presumed as follows, but is not limited thereto.

In the cultivation of a fruit vegetable plant in the related art, cultivation was carried out in the same environment even though the suitable cultivation environment differs depending on the part. For example, in order to promote photosynthesis and promote sugar synthesis, it is preferable to carry out cultivation in a high-temperature environment, and it is preferable to promote fruit growth and translocate sugar synthesized by photosynthesis to the fruit. In addition, in order to improve a taste of the fruit and increase a yield of the fruit, it is preferable to carry out cultivation in an environment having a temperature different from the environment in which photosynthesis is promoted. For example, in the light period, it is preferable to carry out cultivation in a low temperature environment rather than an environment in which photosynthesis is promoted.

According to the method of cultivating of the present disclosure, in an environment or the like suitable for photosynthesis of at least one part of a plurality of ground parts generated from one plant seedling of a fruit vegetable plant, it is possible to cultivate at least one part, which is different from the above part, by separating thereof in an environment suitable for fruit growth (hereinafter, referred to as "separate cultivation"), and thus it is possible to harvest a high-quality fruit. In addition, it is possible to strictly manage the cultivation condition in the plant factory, and the method of cultivating a fruit vegetable plant of the present disclosure is suitable for cultivation in the plant factory.

The method of cultivating a fruit vegetable plant according to the present disclosure is suitable for cultivation in a plant factory, but is not limited to this, and may be cultivated in a greenhouse or the like.

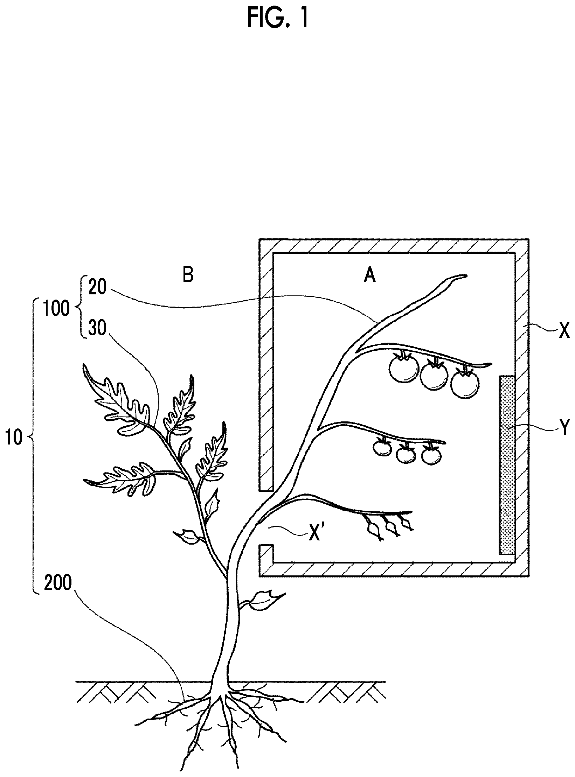

As shown in Fig. 1, a fruit vegetable plant 10 can have a main branch 20 and at least one side branch 30 as the ground part 100, and it is possible to cultivate the main branch 20 and the side branch 30 in different environments (environment A and environment B in Fig. 1). In Fig. 1, 200 represents a root part of the fruit vegetable plant 10.

In Fig. 1, a case where the fruit vegetable plant 10 has one side branch 30 (also referred to as two tailoring) is shown, but the number of the side branches 30 is not particularly limited, and two or more side branches may be included (not shown).

In addition, different environments in which at least two parts of a plurality of ground parts generated from one plant seedling of a fruit vegetable plant are cultivated can be spatially separated by using a reflective sheet, a film, a cloth, or a blackout sheet for agriculture, for example.

For example, as shown in Fig. 1, by accommodating the main branch 20 of the fruit vegetable plant 10 in an accommodation portion X in which a reflective sheet or the like is molded into a tubular shape or the like, the environment A for cultivating the main branch 20 and the environment B for cultivating the side branch 30 can be spatially separated from each other. The accommodation portion X may have a hole X' through which the main branch 20 passes. There may be one hole X', and in a case where the accommodation portions X are connected as described below, the accommodation portion X may have two or more holes X'.

In addition, for example, the environment for cultivating the main branch 20 may be separated into a plurality of environments by connecting the plurality of accommodation portions X in a vertical direction or the like, for example (not shown).

In addition, for example, the environment for cultivating the main branch 20 may be separated into a plurality of environments by providing a partition formed by molding the reflective sheet or the like, which has a hole through which the main branch 20 passes, in the accommodation portion X (not shown).

In the accommodation portion X, a light source Y may be installed, or a tube (not shown) for blowing hot air, cold air, or the like may be inserted. In addition, a light source may be installed in the environment B (not shown).

In the method of cultivating a fruit vegetable plant of the present disclosure, it is preferable that the "at least two parts" are cultivated in an environment in which one or more conditions selected from temperature, relative humidity, light, carbon dioxide concentration, and air flow are different.

The "different environment" preferably includes a fruit growth promoting environment and a photosynthesis promoting environment. The fruit growth promoting environment includes at least a fruit enlargement promoting environment, and in the fruit enlargement promoting environment, one or more conditions selected from temperature, relative humidity, light, carbon dioxide concentration, and air flow are set as conditions suitable for promoting fruit growth of a fruit vegetable plant. In addition, in the photosynthesis promoting environment, one or more conditions selected from temperature, relative humidity, light, carbon dioxide concentration, and air flow are set as conditions suitable for promoting photosynthesis of a fruit vegetable plant. By including a fruit growth promoting environment and a photosynthesis promoting environment as different environments, fruits with higher quality can be harvested.

In a case where the fruit vegetable plant has a main branch and one side branch as the ground part, it is preferable that one of the main branch or the side branch is cultivated in a fruit growth promoting environment and the other is cultivated in a photosynthesis promoting environment. By cultivating one of the main branch or the side branch in the fruit growth promoting environment and cultivating the other in the photosynthesis promoting environment, fruits with higher quality can be harvested.

In a case where the "different environment" includes the fruit growth promoting environment and the photosynthesis promoting environment, it is preferable that a part of the fruit vegetable plant cultivated in the fruit growth promoting environment or the photosynthesis promoting environment is accommodated in the accommodation portion. By accommodating a part of a fruit vegetable plant cultivated in the fruit growth promoting environment or the photosynthesis promoting environment in the accommodation portion, it becomes easy to adjust conditions such as a temperature in the fruit growth promoting environment and the photosynthesis promoting environment.

The number of plants cultivated in the fruit growth promoting environment or the photosynthesis promoting environment is not particularly limited. In a case where the fruit vegetable plant has two or more side branches as a plurality of ground parts, two or more of the main branch and the plurality of side branches may be cultivated in the fruit growth promoting environment or the photosynthesis growth promoting environment.

By cultivating two or more side branches of the fruit vegetable plant in the fruit growth promoting environment, the number of harvested fruits can be improved. In addition, by cultivating two or more side branches of the fruit vegetable plant in the photosynthesis promoting environment, it is possible to improve cultivation efficiency of the fruit vegetable plant and to improve the quality of the harvested fruit.

From a viewpoint of cultivation cost, quality of harvested fruits, and cultivation efficiency of the fruit vegetable plant, the number of cultivated plants in the fruit growth promoting environment is preferably 2 or more and 4 or less.

In addition, the number of cultivated plants in the photosynthesis promoting environment is preferably 2 or more and 4 or less from the viewpoint of cultivation cost, quality of the fruit, and cultivation efficiency of fruit vegetable plant.

Further, from the viewpoint of cultivation cost, quality of the fruit, and cultivation efficiency of the fruit vegetable plant, a ratio of the number of branches cultivated in the photosynthesis promoting environment to the number of branches cultivated in the fruit growth promoting environment (the number of branches cultivated in the photosynthesis promoting environment/the number of branches cultivated in the fruit growth promoting environment) is preferably 0.3 to 5, more preferably 0.5 to 4, and further more preferably 1 to 3.

A start time of the separate cultivation is not particularly limited, and can be appropriately adjusted depending on the type of the fruit vegetable plant to be cultivated and the environmental conditions to be adjusted.

In a case where a fruit vegetable plant having a main branch and a side branch is separately cultivated in a photosynthesis promoting environment and a fruit growth promoting environment, cultivation in the fruit growth promoting environment can be started at a timing at which fruiting of a first flower cluster was confirmed in any of the main branch or the side branch. In addition, the cultivation in the fruit growth promoting environment may be started at a timing at which the fruit has reached a certain size (for example, exceeding 5 cm).

In addition, the cultivation in the photosynthesis promoting environment may be started immediately after determining cultivation in the photosynthesis promoting environment. For example, it can be determined that out of the main branch and the side branch, one branch in which budding of the first flower cluster was confirmed first, or a plurality of branches selected in the order in which budding of the first flower cluster was confirmed are cultivated in the fruit growth promoting environment, and the other branch is cultivated in the photosynthesis promoting environment.

It is preferable that the light period temperature in the fruit enlargement promoting environment included in the fruit growth promoting environment and the light period temperature in the photosynthesis promoting environment are different from each other.

The light period temperature in the fruit enlargement promoting environment is preferably 15°C to 25°C, and more preferably 17°C to 23°C. By setting the light period temperature in the fruit enlargement promoting environment within the numerical value range, it is possible to promote translocation of sugar to the fruit having a part to be cultivated in the fruit enlargement promoting environment without inhibiting the production of components in the fruit, and it is possible to improve the quality of the harvested fruit.

A dark period temperature in the fruit enlargement promoting environment is not particularly limited and may be, for example, 15°C to 25°C.

The light period temperature in the photosynthesis promoting environment is preferably 25°C to 30°C, and more preferably 26°C to 28°C. By setting the light period temperature in the photosynthesis promoting environment within the numerical value range, it is possible to promote photosynthesis of a part to be cultivated in the photosynthesis promoting environment, and it is possible to promote photosynthesis of sugar, and thus it is possible to improve the quality of the harvested fruit.

The dark period temperature in the photosynthesis promoting environment is not particularly limited and may be, for example, 10°C to 20°C.

In the present disclosure, the light period temperature and the dark period temperature in the photosynthesis promoting environment and the fruit growth promoting environment are measured by disposing a thermometer at a position 1 cm away from a part to be cultivated in each environment. As the thermometer, for example, a temperature/humidity sensor THA-3151 manufactured by T & D Co., Ltd. can be used.

In the present disclosure, the "light period" means a period during which the fruit vegetable plant is irradiated with a light source, or a period during which a light having an illuminance of 2 lux or more is irradiated. In addition, in the present disclosure, the "dark period" means a period during which the fruit vegetable plant is not irradiated with a light source, or a period of darkness or a period during which a light with an illuminance of less than 2 lux is irradiated.

A method of adjusting the temperature is not particularly limited and can be performed by a known method in the related art. For example, the temperature condition can be adjusted by sending hot air or cold air.

It is preferable that the relative humidity in the fruit enlargement promoting environment and the relative humidity in the photosynthesis promoting environment are different from each other.

The relative humidity in the fruit enlargement promoting environment is preferably 40% to 60%, and more preferably 43% to 57%. It is possible to improve the quality of the harvested fruit by setting humidity in the fruit enlargement promoting environment within the numerical value range.

The relative humidity in the photosynthesis promoting environment is preferably 60% to 80%, and more preferably 63% to 77%. By setting the humidity in the photosynthesis promoting environment within the numerical value range, pore openings in leaves tend to be large, the amount of carbon dioxide taken in is increased, photosynthesis is promoted, and sugar synthesis is promoted, and thus it is possible to improve the quality of the harvested fruit.

In the present disclosure, the relative humidity in the fruit enlargement promoting environment and the photosynthesis promoting environment is measured by disposing a humidity meter at a position 1 cm away from a part to be cultivated in each environment. As the humidity meter, for example, a temperature/humidity sensor THA-3151 manufactured by T & D Co., Ltd. can be used.

A method of adjusting the humidity is not particularly limited, and the humidity can be adjusted by a known method in the related art. For example, the humidity condition can be adjusted by using an air conditioning device having a humidifying function and a dehumidifying function.

It is preferable that the light conditions in the fruit enlargement promoting environment and the photosynthesis promoting environment are different. Examples of the light condition include light intensity, light-dark cycle, and the like.

In a case where a fruit vegetable plant has a main branch and two or more side branches, and at least two of the main branch and the side branch are cultivated in a photosynthesis promoting environment, it is preferable that the light-dark cycle is controlled and at least one of the main branch or the side branch to be cultivated in the photosynthesis promoting environment stays in the light period. By controlling the light-dark cycle, any one of the branches stays in the light period and photosynthesis is promoted, and thus it is possible to improve the cultivation efficiency of the fruit vegetable plant.

The light condition can be adjusted by using an artificial light irradiation device such as an LED and a fluorescent lamp as the light source, for example. The number of light sources is not particularly limited, and two or more light sources may be used. For example, light sources can be installed in each of the fruit growth promoting environment and the photosynthesis promoting environment.

The light intensity in the fruit enlargement promoting environment is preferably 75 µmol/m²·s to 175 µmol/m²·s, and more preferably 100 µmol/m²·s to 150 µmol/m²·s. By setting the light intensity in the fruit enlargement promoting environment within the numerical value range, it is possible to improve the quality of the harvested fruit.

In addition, in the fruit enlargement promoting environment, a ratio of the light period time to the dark period time (light period time/dark period time) is preferably 0.3 to 3, and more preferably 0.5 to 2. By setting the light-dark cycle in the fruit enlargement promoting environment as the conditions, it is possible to improve the quality of the harvested fruit and the cultivation efficiency. In the present disclosure, the light intensity means light intensity in the light period.

The light intensity in the photosynthesis promoting environment is preferably 200 µmol/m²·s to 300 µmol/m²·s, and more preferably 220 µmol/m²·s to 280 µmol/m²·s. By setting the light intensity in the photosynthesis promoting environment within the numerical value range, it is possible to improve the quality of the harvested fruit.

In addition, in the photosynthesis promoting environment, a ratio of the light period time to the dark period time is preferably 1 to 4, and more preferably 1 to 3. By setting the light-dark cycle in the photosynthesis promoting environment as the condition, it is possible to improve the quality of the harvested fruit and the cultivation efficiency.

In the present disclosure, the light intensity in the fruit enlargement promoting environment and the photosynthesis promoting environment is measured by disposing a light receiving surface of a measuring device toward the light source at a position 1 cm away from a part to be cultivated in each environment. As the measuring device, for example, a light analyzer (LA105, manufactured by Nippon Medical & Chemical Instruments Co., Ltd.) or the like can be used. In a case where the light sources are disposed in two or more directions of the fruit vegetable plant, the sum of the light intensities measured by disposing the measuring device toward respective light sources is defined as the light intensity.

In the method of cultivating a fruit vegetable plant according to the present disclosure, from a viewpoint of cultivation efficiency, the light energy efficiency is preferably 60 g/MJ or more, more preferably 90 g/MJ or more, and further more preferably 130 g/MJ or more.

In the present disclosure, the light energy efficiency represents the g number of the harvested fruits with respect to 1 MJ of light, and can be adjusted by adjusting one or more conditions selected from temperature, relative humidity, light, carbon dioxide concentration, and air flow.

The irradiation direction of the light is not particularly limited and may be performed from either an upward direction or a side surface direction. However, for a long-stem fruit vegetable plant such as a tomato, from a viewpoint of irradiation efficiency, it is preferable to perform irradiation from the side surface direction. In addition, irradiation of the light may be performed from both the upward direction and the side surface direction.

It is preferable that the carbon dioxide concentration in the fruit enlargement promoting environment and the carbon dioxide concentration in the photosynthesis promoting environment are different from each other.

The carbon dioxide concentration in the fruit enlargement promoting environment is preferably 300 ppm to 2,000 ppm, and more preferably 300 ppm to 1,000 ppm. By setting the carbon dioxide concentration in the fruit enlargement promoting environment within the numerical value range, it is possible to improve the quality of the harvested fruit.

The carbon dioxide concentration in the photosynthesis promoting environment is preferably 800 ppm or more, and more preferably 1,000 ppm or more. By setting the carbon dioxide concentration in the photosynthesis promoting environment within the numerical value range, it is possible to promote photosynthesis of a part to be cultivated in the photosynthesis promoting environment, and it is possible to improve the quality of the harvested fruit. The carbon dioxide concentration in the photosynthesis promoting environment is preferably 4,000 ppm or less.

In the present disclosure, the carbon dioxide concentration in the fruit enlargement promoting environment and the photosynthesis promoting environment is measured by disposing a carbon dioxide concentration meter at a position 1 cm away from a part to be cultivated in each environment. As the carbon dioxide concentration meter, for example, LI-850 manufactured by LI-COR, Inc. can be used.

The method of adjusting the carbon dioxide concentration is not particularly limited, and the carbon dioxide concentration can be adjusted by a known method in the related art. For example, the carbon dioxide concentration can be adjusted by using an air conditioning device or the like.

It is preferable that the air flow in the fruit enlargement promoting environment and the air flow in the photosynthesis promoting environment are different from each other.

In the fruit enlargement promoting environment, it is preferable to generate an air flow of 0.1 m/s to 3.0 m s, and it is more preferable to generate an air flow of 0.1 m/s to 0.5 m/s. By generating the air flow in the fruit enlargement promoting environment, it is possible to prevent water vapor from staying in the vicinity of the fruit and to achieve high humidity, and thus it is possible to improve the quality of the harvested fruit.

In the photosynthesis promoting environment, it is preferable to generate an air flow of 0.2 m/s to 1.8 m/s, and it is more preferable to generate an air flow of 0.6 m/s to 1.2 m/s. By generating the air flow in the photosynthesis promoting environment, it is possible to promote the photosynthesis of the part to be cultivated in the photosynthesis promoting environment by keeping the carbon dioxide concentration and the humidity on a leaf surface constant, and it is possible to improve the quality of the harvested fruit.

By generating an air flow in the fruit enlargement promoting environment and the photosynthesis promoting environment, it is possible to evaporate water droplets adhering to the part to be cultivated in each environment, and it is possible to prevent the growth of bacteria and the like. In addition, by preventing the retention of water vapor, it is possible to promote evaporation from the leaves.

In the present disclosure, conditions of the air flow in the fruit enlargement promoting environment and the photosynthesis promoting environment are measured by disposing a wind speed meter at a position 1 cm away from a part to be cultivated in each environment. As the wind speed meter, for example, testo435-2 manufactured by Testo Co., Ltd. can be used.

The method of adjusting the air flow is not particularly limited, and the air flow can be adjusted by a known method in the related art. For example, the air flow can be adjusted by using an air conditioning device, a blower, or the like.

The fruit growth promoting environment preferably includes at least one of a flowering promoting environment or a fruit ripening environment in addition to the fruit enlargement promoting environment, and more preferably includes both the flowering promoting environment and the fruit ripening environment.

In the flowering promoting environment, one or more conditions selected from temperature, relative humidity, light, carbon dioxide concentration, and air flow are set as conditions suitable for promoting flowering of a fruit vegetable plant, and in the fruit ripening environment, one or more conditions selected from temperature, relative humidity, light, carbon dioxide concentration, and air flow are set as conditions suitable for the ripening of the fruit of the fruit vegetable plant. As the fruit growth promoting environment includes the flowering promoting environment, it is possible to further improve the cultivation efficiency of the fruit vegetable plant. As the fruit growth promoting environment includes the fruit ripening environment, it is possible to further improve the quality of the harvested fruit.

In the flowering promoting environment, it is preferable to cultivate a portion having a flower cluster before flowering (hereinafter, referred to as a flower cluster part). By cultivating the flower cluster part before flowering in the flowering promoting environment, it is possible to promote flowering of the flower cluster, and it is possible to shorten a time until fruiting, and thus it is possible to improve the cultivation efficiency.

In addition, in the fruit enlargement promoting environment, it is preferable to cultivate a flower cluster part having a fruit before the color is confirmed, after fruiting. Specifically, it is preferable to cultivate a flower cluster part having a tomato fruit before becoming reddish. By cultivating the flower cluster part in the fruit enlargement promoting environment, it is possible to promote the translocation of sugar to the fruit, and it is possible to improve the quality of the harvested fruit.

In addition, it the fruit ripening environment, it is preferable to cultivate a flower cluster part having a fruit of which color is confirmed. By cultivating the flower cluster part in the fruit ripening environment, it is possible to improve the appearance such as a color of the fruit. For example, in a case where a tomato is cultivated as a fruit vegetable plant, it is possible to improve the redness of the tomato, and it is possible to achieve a good appearance.

In a case where the fruit growth promoting environment includes at least one of a flowering promoting environment or a fruit ripening environment in addition to the fruit enlargement promoting environment, it is preferable to accommodate parts of the fruit vegetable plant cultivated in each environment in different accommodation portions. By performing cultivation in different accommodation portions, adjustment of conditions such as temperature in the fruit enlargement promoting environment, the flowering promoting environment, and the fruit ripening environment becomes easy.

For accommodating a part of the fruit vegetable plant to be cultivated in the fruit enlargement promoting environment, the flowering promoting environment, and the fruit ripening environment, those in which the accommodation portions are connected in the vertical direction can be used. In a case where the connected accommodation portions are used, it is preferable that a light source is provided in each accommodation portion. In addition, it is preferable that, in each accommodation portion, a tube for blowing hot air, cold air, or the like is inserted.

The light period temperature in the flowering promoting environment is preferably 25°C to 30°C, and more preferably 26°C to 28°C. By setting the light period temperature in the flowering promoting environment within the numerical value range, it is possible to improve the cultivation efficiency.

The dark period temperature in the flowering promoting environment is not particularly limited and may be, for example, 10°C to 20°C.

The light period temperature in the fruit ripening environment is preferably 15°C to 25°C, and more preferably 17°C to 23°C. By setting the light period temperature in the fruit ripening environment within the numerical value range, it is possible to improve the appearance of the harvested fruit.

The dark period temperature in the fruit ripening environment is not particularly limited and may be, for example, 15°C to 25°C.

In the present disclosure, the light period temperature and the dark period temperature in the flowering promoting environment and the fruit ripening environment are measured by disposing a thermometer at a position 1 cm away from a part to be cultivated in each environment.

The relative humidity in the flowering promoting environment is preferably 60% to 80%, and more preferably 63% to 77%. By setting the relative humidity in the flowering promoting environment within the numerical value range, it is possible to improve the cultivation efficiency.

The relative humidity in the fruit ripening environment is preferably 40% to 60%, and more preferably 43% to 57%. By setting the relative humidity in the fruit ripening environment within the numerical value range, it is possible to improve the appearance of the fruit to be harvested.

In the present disclosure, the relative humidity in the flowering promoting environment and the fruit ripening environment is measured by disposing a humidity meter at a position 1 cm away from a part to be cultivated in each environment.

The light intensity in the flowering promoting environment is preferably 200 µmol/m²·s to 300 µmol/m²·s, and more preferably 220 µmol/m²·s to 280 µmol/m²·s. By setting the light intensity in the flowering promoting environment within the numerical value range, it is possible to improve the cultivation efficiency.

The light intensity in the fruit ripening environment is preferably 75 µmol/m²·s to 175 µmol/m²·s, and more preferably 100 µmol/m²·s to 150 µmol/m²·s. By setting the light intensity in the fruit ripening environment within the numerical value range, it is possible to improve the appearance of the harvested fruit.

In the present disclosure, the light intensity in the flowering promoting environment and the fruit ripening environment is measured by disposing a light receiving surface of the measuring device toward the light source at a position 1 cm away from the part to be cultivated in each environment.

In the flowering promoting environment, a ratio of the time in the light period to the time in the dark period is preferably 1 to 4, and more preferably 1 to 3. By setting the light-dark cycle in the flowering promoting environment as the conditions, it is possible to improve the cultivation efficiency.

In the fruit ripening environment, the ratio of the time in the light period to the time in the dark period is preferably 1 to 4, and more preferably 1 to 3. By setting the light-dark cycle in the fruit ripening environment as the conditions, it is possible to improve the appearance of the harvested fruit.

The carbon dioxide concentration in the flowering promoting environment is preferably 300 ppm to 4,000 ppm, and more preferably 1,000 ppm to 2,000 ppm. By setting the carbon dioxide concentration in the flowering promoting environment within the numerical value range, it is possible to improve the cultivation efficiency.

The carbon dioxide concentration in the fruit ripening environment is preferably 300 ppm to 2,000 ppm, and more preferably 300 ppm to 1,000 ppm. By setting the carbon dioxide concentration in the fruit ripening environment within the numerical value range, it is possible to improve the appearance of the harvested fruit.

In the present disclosure, the carbon dioxide concentration in the flowering promoting environment and the fruit ripening environment is measured by disposing a carbon dioxide concentration meter at a position 1 cm away from a part to be cultivated in each environment.

In the flowering promoting environment, it is preferable to generate an air flow of 0.1 m/s to 3.0 m/s, and it is more preferable to generate an air flow of 1.0 m/s to 2.0 m/s. By generating the air flow in the flowering promoting environment, it is possible to further improve the cultivation efficiency.

In the fruit ripening environment, it is preferable to generate an air flow of 0.1 m/s to 3.0 m/s, and it is more preferable to generate an air flow of 0.1 m/s to 0.5 m/s. By generating the air flow in the fruit ripening environment, it is possible to further improve the appearance of the harvested fruit.

By generating an air flow in the flowering promoting environment and the fruit ripening environment, it is possible to evaporate water droplets adhering to the part to be cultivated in each environment, and it is possible to prevent the growth of bacteria and the like.

In the present disclosure, conditions of the air flow in the flowering promoting environment and the fruit ripening environment are measured by disposing a wind speed meter at a position 1 cm away from the part to be cultivated in each environment.

In the cultivation method according to the present disclosure, it is preferable that the leaves of the main branch or the side branch to be cultivated in the fruit growth promoting environment are defoliated. Specifically, it is preferable to defoliate leaves below the flower cluster where flowering is confirmed. By defoliating leaves below the flower cluster where flowering is confirmed, it is possible to improve the cultivation efficiency.

In the cultivation method according to the present disclosure, it is preferable to remove the flower buds of the main branch or the side branch cultivated in the photosynthesis promoting environment. By removing the flower buds of the main branch or the side branch to be cultivated, it is possible to improve the cultivation efficiency.

In the cultivation method according to the present disclosure, it is preferable to adjust an area of the leaf of the main branch or the side branch to be cultivated in the photosynthesis promoting environment. By adjusting the area of the leaf, it is possible to improve the cultivation efficiency. In addition, it is preferable that the area of the leaf is appropriately adjusted according to an amount, a degree of growth, and the like of the fruit in the main branch or the side branch to be cultivated in the fruit growth promoting environment. A method of adjusting the area of the leaf is not particularly limited, and for example, the method may be performed by defoliation, or by pinching the main branch or the side branch.

In the cultivation method according to the present disclosure, it is preferable to appropriately remove the lateral buds (lateral bud nipping) that are not used as the side branches.

The fruit vegetable plant may be cultivated by using soil cultivation or by using hydroponic cultivation.

A cultivation facility for fruit vegetable plants is not particularly limited, and examples thereof include an artificial light type plant factory, a solar type plant factory, a greenhouse, and the like.

The fruit vegetable plant is not particularly limited, and examples thereof include Solanaceae family plants such as tomato, eggplant, and pepper, Cucurbitaceae family plants such as cucumber, pumpkin and zucchini, Fabaceae family plants such as green bean, pea, and white bean, Malvaceae family plants such as okra, Poaceae family plants such as corn, and the like. Among the fruit vegetable plants, the Solanaceae family plants are suitable for the cultivation method of the present disclosure, and tomato is more suitable. The tomato harvested by the cultivation method of the present disclosure is excellent in quality such as appearance, texture, and taste, and has a high Brix sugar content and a lycopene amount.

The tomato includes a midi tomato, a mini tomato, a mini tomato, a fruit tomato, and the like.

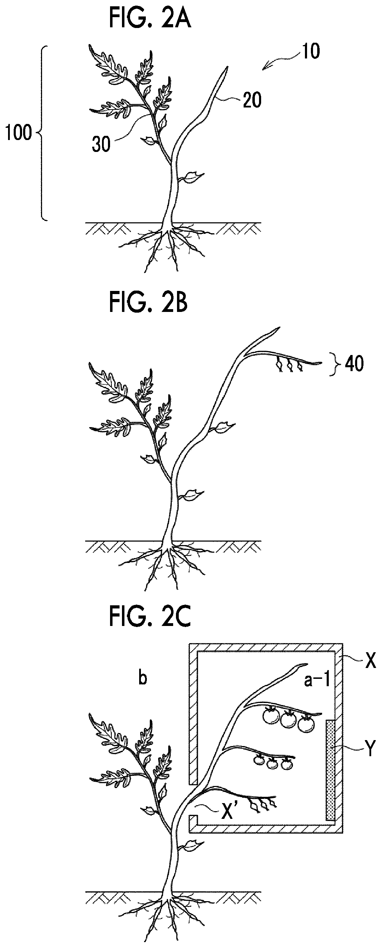

Hereinafter, as an example of the method of cultivating a fruit vegetable plant of the present disclosure, a case where tomato plant seedlings 10 having a main branch 20 and one side branch 30 are separately cultivated in a fruit growth promoting environment including a fruit enlargement promoting environment a-1 and a photosynthesis promoting environment will be described with reference to Figs. 2A to 2C.

As shown in Fig. 2A, the tomato plant seedlings 10 have the main branch 20 and one side branch 30 as the ground part 100, and the main branch 20 and the side branch 30 are cultivated in the same environment.

As shown in Fig. 2B, since the buds of a first flower cluster 40 are confirmed in the main branch 20, it is determined that the main branch 20 is cultivated in the fruit growth promoting environment a (fruit enlargement promoting environment a-1) and the side branch 30 is cultivated in the photosynthesis promoting environment b. Hereinafter, in the side branch 30, flower buds are removed as soon as they are confirmed. In addition, in the fruit growth promoting environment a, the leaves below the flower cluster where flowering is confirmed are defoliated.

In the main branch 20, at a timing at which fruiting of the first flower cluster 40 is confirmed and a fruit reached a certain size (for example, exceeding 5 cm in diameter), as shown in Fig. 2C, the main branch 20 is accommodated by an accommodation portion X which is formed by molding a reflective sheet and has a hole X' through which the main branch 20 passes, and the fruit enlargement promoting environment a-1 in which the main branch 20 is cultivated and the photosynthesis promoting environment b in which the side branch 30 is cultivated are spatially separated.

In addition, in the fruit enlargement promoting environment a-1, an artificial light source Y is installed, and a tube (not shown) for blowing hot air, cold air, or the like is inserted.

A fruit is harvested as soon as the cultivated fruit has an appropriate color.

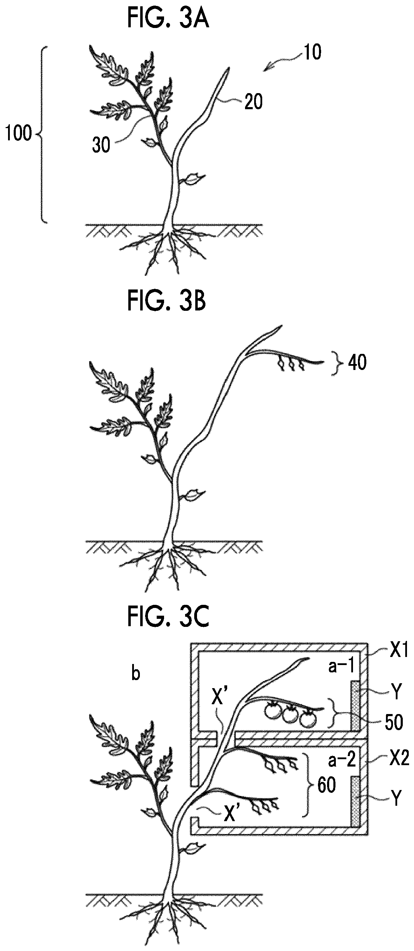

Hereinafter, as another example of the method of cultivating a fruit vegetable plant of the present disclosure, a case where the tomato plant seedlings 10 having the main branch 20 and one side branch 30 are separately cultivated in the fruit growth promoting environment including the fruit enlargement promoting environment a-1 and the flowering promoting environment a-2 and the photosynthesis promoting environment b will be described with reference to Figs. 3A to 3C.

As shown in Fig. 3A, the tomato plant seedlings 10 have the main branch 20 and one side branch 30 as the ground part 100, and the main branch 20 and the side branch 30 are cultivated in the same environment.

As shown in Fig. 3B, since the buds of the first flower cluster 40 were confirmed in the main branch 20, it is determined that the main branch 20 is cultivated in the fruit growth promoting environment a and the side branch 30 is cultivated in the photosynthesis promoting environment b. Hereinafter, in the side branch 30, flower buds are removed as soon as they are confirmed. In addition, in the fruit growth promoting environment a, the leaves below the flower cluster where flowering is confirmed are defoliated.

In the main branch 20, as shown in Fig. 3C, at a timing at which fruiting of the first flower cluster is confirmed and a fruit reached a certain size (for example, exceeding 5 cm in diameter), as shown in Fig. 3C, the main branch 20 is accommodated by connecting an accommodation portion X1 and an accommodation portion X2, which are formed by molding a reflective sheet and have a hole X' through which the main branch 20 passes, and the fruit growth promoting environment a in which the main branch 20 is cultivated and the photosynthesis promoting environment b in which the side branch 30 is cultivated are spatially separated.

A flower cluster part 50 of which fruiting is confirmed is cultivated in the accommodation portion X1 as the fruit enlargement promoting environment a-1, and a flower cluster part 60 of which fruiting is not confirmed is cultivated in the accommodation portion X2 as the flowering promoting environment a-2.

In addition, in each of the accommodation portion X1 and the accommodation portion X2, the artificial light source Y is installed, and a tube (not shown) for blowing hot air, cold air, or the like is inserted.

A fruit is harvested as soon as the cultivated fruit has an appropriate color.

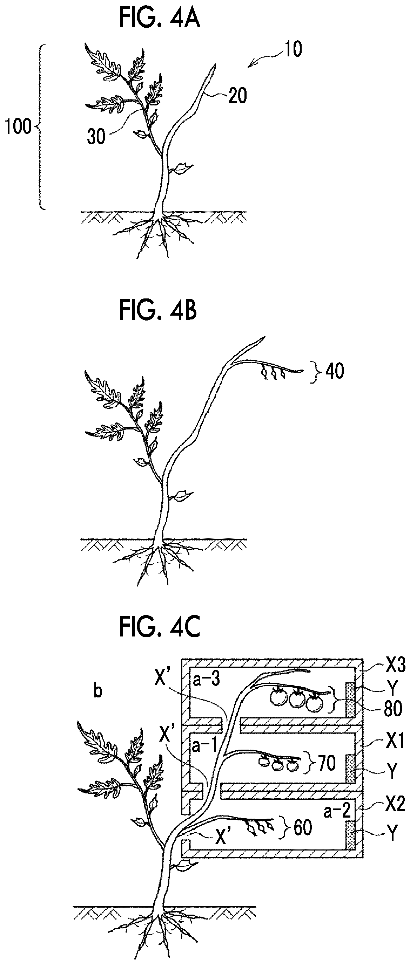

Hereinafter, as another example of the method of cultivating a fruit vegetable plant of the present disclosure, a case where the tomato plant seedlings 10 having the main branch 20 and one side branch 30 are separately cultivated in the fruit growth promoting environment a including the fruit enlargement promoting environment a-1, the flowering promoting environment a-2, and the fruit ripening environment a-3 and the photosynthesis promoting environment b will be described with reference to Figs. 4A to 4C.

As shown in Fig. 4A, the tomato plant seedlings 10 have the main branch 20 and one side branch 30 as the ground part 100, and the main branch 20 and the side branch 30 are cultivated in the same environment.

As shown in Fig. 4B, since the main branch 20 and the side branch 30 are cultivated in the same environment and the buds of the first flower cluster 40 are confirmed in the main branch 20, it is determined that the main branch 20 is cultivated in the fruit growth promoting environment a and the side branch 30 is cultivated in the photosynthesis promoting environment b. Hereinafter, in the side branch 30, flower buds are removed as soon as they are confirmed. In addition, in the fruit growth promoting environment a, the leaves below the flower cluster where flowering is confirmed are defoliated.

In the main branch 20, at a timing at which fruiting of the first flower cluster 40 is confirmed and a fruit reached a certain size (for example, exceeding 5 cm in diameter), as shown in Fig. 4C, the main branch 20 is accommodated by connecting an accommodation portion X1, an accommodation portion X2, and an accommodation portion X3, which are formed by molding a reflective sheet and have a hole X' through which the main branch 20 passes and the fruit growth promoting environment a in which the main branch 20 is cultivated and the photosynthesis promoting environment b in which the side branch 30 is cultivated are spatially separated.

A flower cluster part 80 having a fruit of which redness is confirmed is cultivated, after fruiting, in the accommodation portion X3 as the fruit ripening environment a-3, a flower cluster part 70 having a fruit before becoming reddish is cultivated, after fruiting, in the accommodation portion X1 as the fruit enlargement promoting environment a-1, and a flower cluster part 60 where fruiting is not confirmed is cultivated in the accommodation portion X2 as the flowering promoting environment a-2.

In addition, in each of the accommodation portion X1, the accommodation portion X2, and the accommodation portion X3, an artificial light source Y is installed, and a tube (not shown) for blowing hot air, cold air, or the like is inserted.

A fruit is harvested as soon as the cultivated fruit has an appropriate color.

### (Tomato fruit)

A tomato fruit of the present disclosure is obtained by the method of cultivating a fruit vegetable plant.

The tomato fruit of the present disclosure obtained by the method of cultivating a fruit vegetable plant is excellent in quality such as appearance, texture, and taste, and has a high Brix sugar content and a high lycopene amount.

The tomato fruit of the present disclosure preferably contains 15 mg/100 g or more of lycopene and has a Brix sugar content of 5% by mass or more.

The lycopene amount is preferably 17 mg/100 g or more, and more preferably 19 mg/100 g or more.

The Brix sugar content is preferably 7% by mass or more, and more preferably 9% by mass or more.

In the present disclosure, the Brix sugar content and the lycopene amount of the tomato fruit are obtained as an average value of values measured at four portions in the fruit of the tomato fruit using a fruit and vegetable quality evaluation device Fruit Selector (model: K-BA800, manufactured by Kubota Co., Ltd.).

In the present disclosure, the Brix sugar content and the lycopene amount of the tomato fruit are obtained as an average value of values measured at four portions on an equator on which a diameter of the tomato fruit is the largest, which are four portions on which a line connecting two portions is orthogonal to a line connecting other two portions, using the fruit and vegetable quality evaluation device Fruit Selector (model: K-BA800, manufactured by Kubota Co., Ltd.).

Specifically, the lycopene amount measured by using Fruit Selector is measured as follows.

First, a calibration curve is created by correlating the lycopene amount of the tomato fruit measured by high-speed liquid chromatography (HPLC) with the lycopene amount measured by Fruit Selector. Next, the lycopene amount is measured by converting the lycopene amount measured by using Fruit Selector into the lycopene amount measured by HPLC based on the calibration curve.

### Examples

Hereinafter, the embodiment will be specifically described with reference to Examples, but the embodiment is not limited to these Examples.

### <Example 1>

### Cultivation:

Two-tailored tomato seedlings (variety: Momotaro York (registered trademark)) having a main branch and one side branch were purchased, and hydroponic cultivation was performed until buds of a first flower cluster were confirmed on one of the two branches in a container type plant factory under the following cultivation condition A.

### (Cultivation condition A)

·Light period temperature: 27°C
·Dark period temperature: 19°C
·Relative humidity: 70%
·Light source: LED (artificial light irradiation device)
·Irradiation direction: side surface direction
·Light-dark cycle: light period 16 hours, dark period 8 hours
·Light intensity: 250 µmol/m²·s

Since the buds of the first flower cluster were confirmed on the main branch, it was determined to cultivate the main branch in the fruit growth promoting environment and the side branch in the photosynthesis promoting environment. After confirming the flowering of the first flower cluster, all the leaves below the first flower cluster were defoliated. Subsequently, as soon as the flowering of the flower cluster was confirmed in the upper phase, all the leaves below the flower cluster were defoliated.

At a timing at which fruiting of the first flower cluster was confirmed and a diameter of a fruit exceeded 5 cm, the main branch was accommodated in an accommodation portion, which was formed by molding an agricultural reflective sheet (Agrisheet (registered trademark) Shine White SW1515, manufactured by Nippon Wide Cloth Co., Ltd.) and has a hole through which the main branch passes, and cultivated in a fruit growth promoting environment (fruit enlargement promoting environment) under the following cultivation condition. In addition, in the accommodation portion, a light source was installed, and a tube for blowing hot air, cold air, or the like was inserted.

### (Cultivation condition for fruit enlargement promoting environment)

·Light period temperature: 20°C
·Dark period temperature: 20°C
·Relative humidity: 50%
·Light source: LED (artificial light irradiation device)
·Irradiation direction: side surface direction
·Light-dark cycle: light period 12 hours, dark period 12 hours
·Light intensity: 125 µmol/m²·s

On the other hand, on the side branch, flower buds were plucked whenever being confirmed so that the branch had only leaves. In addition, the cultivation condition of the side branch was not changed, and cultivation was performed using the cultivation condition A as the photosynthesis promoting environment. Considering a fruit status of the main branch and a growth status of leaves on the side branch cultivated in the fruit enlargement promoting environment, the side branch was pinched at a time point when sufficient leaf growth was confirmed (adjustment of leaf area).

After that, the cultivation was continued and the fruits were harvested while nipping the lateral buds, defoliating the leaves, and attracting the leaves as needed.

### <Example 2>

Cultivation was performed in the same manner as in Example 1 except that two-tailored tomato seedlings were changed to three-tailored tomato seedlings having a main branch and two side branches.

Both of the two side branches were cultivated in a photosynthesis promoting environment, and the light-dark cycle was controlled so that the two side branches did not stay in the dark period at the same time until harvesting.

### <Example 3>

Two-tailored tomato seedlings having a main branch and one side branch were purchased and hydroponic cultivation was performed in a greenhouse in Kanagawa prefecture. In a case where a room temperature exceeded 28°C, the inside of the house was cooled by shading of sunlight and cold air, and the temperature and humidity were managed using a humidifier to obtain a cultivation condition B of a temperature of 27°C and a relative humidity of 70%. In addition, only sunlight was used as the light source, and supplementary light was not performed.

Since the buds of the first flower cluster were confirmed on the main branch, it was determined to cultivate the main branch in the fruit growth promoting environment and the side branch in the photosynthesis promoting environment. After confirming the flowering of the first flower cluster on the main branch, all the leaves below the first flower cluster were defoliated. Subsequently, as soon as the flowering of the flower cluster was confirmed in the upper phase, all the leaves below the flower cluster were defoliated.

At a timing at which fruiting on the first flower cluster was confirmed and the diameter of the fruit exceeded 5 cm, the main branch was cooled with cold air, and the main branch was cultivated under a cultivation condition C of a temperature of 20°C and a relative humidity of 50% (fruit enlargement promoting environment).

On the other hand, on the side branch, flower buds were plucked whenever being confirmed so that the branch had only leaves. The cultivation condition of the side branch was not changed, and cultivation was performed using the cultivation condition B as the photosynthesis promoting environment. Considering a fruit status of the main branch and a growth status of leaves on the side branch cultivated in the fruit enlargement promoting environment, the side branch was pinched at a time point when sufficient leaf growth was confirmed (adjustment of leaf area).

After that, the cultivation was continued and the fruits were harvested while nipping the lateral buds, defoliating the leaves, and attracting the leaves as needed.

### <Example 4>

Cultivation was performed in the same manner as in Example 1 except that the growth was continued without pinching the side branches, and defoliating the excess leaves (adjustment of the leaf area).

### <Example 5>

Cultivation was performed in the same manner as in Example 1 except that the fruit growth promoting environment was changed to an environment including a flowering promoting environment in addition to the fruit enlargement promoting environment, and the growth was continued without pinching the lateral buds and defoliating the excess leaves (adjustment of the leaf area).

Specifically, at a timing at which fruiting on the first flower cluster was confirmed and the diameter of the fruit exceeded 5 cm, the main branch was accommodated by vertically connecting two accommodation portions, which was formed by molding a reflective sheet and having a hole through which the main branch passes, and the fruit growth promoting environment in which the main branch was cultivated and a photosynthesis promoting environment in which the side branch was cultivated were spatially separated.

The flower cluster part where fruiting was confirmed was cultivated in an upper accommodation portion as a fruit enlargement promoting environment, and the flower cluster where fruiting was not confirmed was cultivated in a lower accommodation portion as a flowering promoting environment.

In addition, in each of the accommodation portions, an artificial light source was installed, and a tube for blowing hot air, cold air, or the like was inserted.

### (Flowering promoting environment)

·Light period temperature: 27°C
·Dark period temperature: 19°C
·Relative humidity: 70%
·Light source: LED (artificial light irradiation device)
·Irradiation direction: side surface direction
·Light-dark cycle: light period 16 hours, dark period 8 hours
·Light intensity: 250 µmol/m²·s

### <Example 6>

Cultivation was performed in the same manner as in Example 1 except that a fruit growth promoting environment was changed to an environment including a flowering promoting environment, a fruit enlargement promoting environment, and a fruit ripening environment, and the growth was continued without pinching the side branches (adjustment of the leaf area).

Specifically, at a timing at which fruiting on the first flower cluster was confirmed and the diameter of the fruit exceeded 5 cm, the main branch was accommodated by vertically connecting three accommodation portions, which were formed by molding a reflective sheet and have a hole through which the main branch passes, and the fruit growth promoting environment in which the main branch was cultivated and the photosynthesis promoting environment in which the side branch was cultivated were spatially separated.

The flower cluster part where redness was confirmed was cultivated in an upper accommodation portion as a fruit ripening environment, and the flower cluster part having a fruit before becoming reddish was cultivated, after fruiting, in the central accommodation portion as the fruit enlargement promoting environment, and the flower cluster part where fruiting was not confirmed was cultivated in the lower accommodation portion as the flowering promoting environment.

In addition, in each of the accommodation portions, an artificial light source was installed, and a tube for blowing hot air, cold air, or the like was inserted.

### (Flowering promoting environment)

·Light period temperature: 27°C
·Dark period temperature: 19°C
·Relative humidity: 70%
·Light source: LED (artificial light irradiation device)
·Irradiation direction: side surface direction
·Light-dark cycle: light period 16 hours, dark period 8 hours
·Light intensity: 250 µmol/m²·s

### (Fruit ripening environment)

·Light period temperature: 20°C
·Dark period temperature: 20°C
·Relative humidity: 50%
·Light source: LED (artificial light irradiation device)
·Irradiation direction: side surface direction
·Light-dark cycle: light period 16 hours, dark period 8 hours
·Light intensity: 125 µmol/m²·s

### <Example 7>

Cultivation was performed in the same manner as in Example 1 except that two-tailored tomato seedlings were changed to four-tailored tomato seedlings having a main branch and three side branches, and the fruit growth promoting environment was changed to an environment including a flowering promoting environment, a fruit enlargement promoting environment, and a fruit ripening environment.

Specifically, at a timing at which fruiting on the first flower cluster was confirmed and the diameter of the fruit exceeded 5 cm in the main branch and one side branch, two of accommodation portion connecting bodies obtained by vertically connecting three accommodation portions, which were formed by molding a reflective sheet and have a hole through which the main branch passes, were prepared, the main branch and one side branch were accommodated in another accommodation portion connecting body, and the fruit growth promoting environment in which the main branch and one side branch were cultivated and the photosynthesis promoting environment in which the other two side branches were cultivated were spatially separated.

The flower cluster part where redness was confirmed was cultivated in an upper accommodation portion as a fruit ripening environment, and the flower cluster part having a fruit before becoming reddish was cultivated, after fruiting, in the central accommodation portion as the fruit enlargement promoting environment, and the flower cluster part where fruiting was not confirmed was cultivated in the lower accommodation portion as the flowering promoting environment.

In addition, in each of the accommodation portions, an artificial light source was installed, and a tube for blowing hot air, cold air, or the like was inserted.

In addition, the light-dark cycle was controlled so that the two side branches cultivated in the photosynthesis promoting environment did not stay in the dark period at the same time until harvesting.

### (Flowering promoting environment)

·Light period temperature: 27°C
·Dark period temperature: 19°C
·Relative humidity: 70%
·Light source: LED (artificial light irradiation device)
·Irradiation direction: side surface direction
·Light-dark cycle: light period 16 hours, dark period 8 hours
·Light intensity: 250 µmol/m²·s

### (Fruit ripening environment)

·Light period temperature: 20°C
·Dark period temperature: 20°C
·Relative humidity: 50%
·Light source: LED (artificial light irradiation device)
·Irradiation direction: side surface direction
·Light-dark cycle: light period 16 hours, dark period 8 hours
·Light intensity: 125 µmol/m²·s

### <Comparative Example 1>

One-tailored tomato seedling having only the main branch was purchased, and soil cultivation was performed in a greenhouse in Kanagawa prefecture. In a case where the room temperature exceeded 28°C, the inside of the house was cooled by shading of sunlight and cold air, and the temperature and humidity were managed using a humidifier to maintain an environment of a temperature of 27°C and a relative humidity of 70%.

In addition, only sunlight was used as the light source, and supplementary light was not performed. After that, the cultivation was continued and the fruits were harvested while nipping the lateral buds, defoliating the leaves, and attracting the leaves as needed.

### <Comparative Example 2>

Two-tailored tomato seedlings were purchased, and cultivation was performed in a container type plant factory under the following conditions. After that, the cultivation was similarly continued for two branches and the fruits were harvested while nipping the lateral buds, defoliating the leaves, and attracting the leaves as needed.

### (Cultivation conditions)

·Light period temperature: 27°C
·Dark period temperature: 19°C
·Relative humidity: 70%
·Light source: LED (artificial light irradiation device)
·Light-dark cycle: light period 16 hours, dark period 8 hours
·Light intensity: 250 µmol/m²·s

### <<Measurement of Brix sugar content and lycopene amount>>

Using a fruit and vegetable quality evaluation device Fruit Selector (model: K-BA800, manufactured by Kubota Co., Ltd.), a Brix sugar content and a lycopene amount were measured in four portions on an equator in which the diameter of the fruit harvested in Examples and Comparative Examples is the largest, which are four portions on which a line connecting two portions is orthogonal to a line connecting other two portions, and an average value thereof was calculated, respectively. The calculation results are summarized in Table 1.

In addition, the lycopene amount obtained by using Fruit Selector was specifically performed as follows. First, a calibration curve was created by correlating the lycopene amount of the tomato fruit measured by high-speed liquid chromatography (HPLC) with the lycopene amount measured by Fruit Selector. Next, the lycopene amount measured using Fruit Selector was converted into the lycopene amount measured by HPLC based on the calibration curve, and this lycopene amount was adopted.

### «Quality evaluation»

The fruits harvested in Examples and Comparative Examples were sampled by 5 persons, and the appearance (appearance before and after cutting), aroma, taste (sweetness, balance between sweetness and acidity, depth of taste, flavor and richness), and texture (freshness, softness of the skin, softness of the flesh, amount of jelly part, balance between flesh and jelly part, and feeling on tongue) were evaluated by being rated out of a maximum of 10 points each (normally 5 points, 10 points for high evaluation), and an average point of 5 persons was calculated. The calculated average point is summarized in Table 1.

**[Table 1]**

| | Presence or absence of separate cultivation | Tailored number (number) | Sum of number of main branch and side branch cultivated in fruit growth promoting environment (number) | Sum of number of main branch and side branch cultivated in photosynthesis promoting environment (number) | Environment included in fruit growth promoting environment | Presence or absence of adjustment of area of leaf | Light source | Evaluation | | |
|---|---|---|---|---|---|---|---|---|---|---|
| | | | | | | | | Brix sugar content (% by mass) | Lycopene amount (mg/100 g) | Quality evaluation (point) |
| Example 1 | | 2 | 1 | 1 | Fruit enlargement promoting environment | Present | LED | 10 | 18 | 9 |
| Example 2 | | 3 | 1 | 2 | Fruit enlargement promoting environment | Present | LED | 10 | 17 | 9 |
| Example 3 | | 2 | 1 | 1 | Fruit enlargement promoting environment | Present | Sunlight | 5 | 15 | 5 |
| Example 4 | | 2 | 1 | 1 | Fruit enlargement promoting environment | Absent | LED | 5 | 19 | 5 |
| Example 5 | | 2 | 1 | 1 | Flowering promoting environment and fruit enlargement promoting environment | Absent | LED | 10 | 19 | 9 |
| Example 6 | | 2 | 1 | 1 | Flowering promoting environment, fruit enlargement promoting environment, and fruit ripening environment | Absent | LED | 10 | 19 | 9 |
| Example 7 | | 4 | 2 | 2 | Flowering promoting environment, fruit enlargement promoting environment, and fruit ripening environment | Present | LED | 5 | 17 | 8 |
| Comparative Example 1 | | 1 | - | - | - | Absent | Sunlight | 4 | 4 | 5 |
| Comparative Example 2 | | 2 | - | - | - | Absent | LED | 2 | 15 | 2 |

The disclosure of JP2020-190529 filed November 16, 2020 is incorporated herein by reference in its entirety. All documents, patent applications, and technical standards described in the present specification shall be incorporated by reference to the same extent as specifically and individually stated that individual documents, patent applications, and technical standards are incorporated by reference.

## Claims

1. A method of cultivating a fruit vegetable plant, the method comprising:
cultivating at least two parts of a plurality of ground parts generated from one plant seedling of the fruit vegetable plant in different environments.

2. The method of cultivating a fruit vegetable plant according to claim 1,
wherein the different environments differ in one or more conditions selected from temperature, relative humidity, light, carbon dioxide concentration, and air flow.

3. The method of cultivating a fruit vegetable plant according to claim 1 or 2,
wherein the plurality of ground parts of the fruit vegetable plant comprise a main branch and a side branch, and
the main branch and at least one side branch are cultivated in different environments.

4. The method of cultivating a fruit vegetable plant according to any one of claims 1 to 3,
wherein the different environments comprise a fruit growth promoting environment at least including a fruit enlargement promoting environment, and a photosynthesis promoting environment,
in the fruit enlargement promoting environment, one or more conditions selected from temperature, relative humidity, light, carbon dioxide concentration, and air flow are set as conditions suitable for promoting fruit growth of the fruit vegetable plant, and
in the photosynthesis promoting environment, one or more conditions selected from temperature, relative humidity, light, carbon dioxide concentration, and air flow are set as conditions suitable for promoting photosynthesis of the fruit vegetable plant.

5. The method of cultivating a fruit vegetable plant according to claim 4,
wherein a part of the fruit vegetable plant cultivated in the fruit growth promoting environment or the photosynthesis promoting environment is accommodated in an accommodation portion.

6. The method of cultivating a fruit vegetable plant according to claim 4 or 5,
wherein a light period temperature in the fruit enlargement promoting environment is different from a light period temperature in the photosynthesis promoting environment, and
the light period temperature in the fruit enlargement promoting environment is 15°C to 25°C, and the light period temperature in the photosynthesis promoting environment is 25°C to 30°C.

7. The method of cultivating a fruit vegetable plant according to any one of claims 4 to 6,
wherein the plurality of ground parts of the fruit vegetable plant comprise two or more side branches,
at least two of the main branches and the side branches are cultivated in the photosynthesis promoting environment, and
in the photosynthesis promoting environment, a light-dark cycle of light irradiation is controlled, and at least one of the main branch or the side branch is allowed to stay in the light period.

8. The method of cultivating a fruit vegetable plant according to any one of claims 4 to 7,
wherein the plurality of ground parts of the fruit vegetable plant comprise two or more side branches,
at least two of the main branches and the side branches are cultivated in the fruit growth promoting environment.

9. The method of cultivating a fruit vegetable plant according to any one of claims 4 to 8,
wherein in the photosynthesis promoting environment, an area of a leaf comprised in at least one of the main branch or the side branch is adjusted.

10. The method of cultivating a fruit vegetable plant according to any one of claims 4 to 9,
wherein in the photosynthesis promoting environment, flower buds comprised in at least one of the main branch or the side branch are removed.

11. The method of cultivating a fruit vegetable plant according to any one of claims 4 to 10,
wherein the fruit growth promoting environment further includes at least one of a flowering promoting environment or a fruit ripening environment,
in the flowering promoting environment, one or more conditions selected from temperature, relative humidity, light, carbon dioxide concentration, and air flow are set as conditions suitable for promoting flowering of the fruit vegetable plant, and
in the fruit ripening environment, one or more conditions selected from temperature, relative humidity, light, carbon dioxide concentration, and air flow are set as conditions suitable for ripening of a fruit of the fruit vegetable plant.

12. The method of cultivating a fruit vegetable plant according to claim 11,
wherein parts of the fruit vegetable plant cultivated in the fruit enlargement promoting environment, the flowering promoting environment, and the fruit ripening environment are accommodated in different accommodation portions.

13. The method of cultivating a fruit vegetable plant according to any one of claims 1 to 12,
wherein an artificial light irradiation device is used as a light source.

14. The method of cultivating a fruit vegetable plant according to any one of claims 1 to 13,
wherein the fruit vegetable plant is a Solanaceae family plant.

15. The method of cultivating a fruit vegetable plant according to any one of claims 1 to 14,
wherein the fruit vegetable plant is a tomato.

16. A tomato fruit obtained by the method of cultivating a fruit vegetable plant according to claim 15.

17. The tomato fruit according to claim 16,
wherein the tomato fruit comprises 15 mg/100 g or more of lycopene and has a Brix sugar content of 5% by mass or more.

## Amended claims

### Amended claims under Art. 19.1 PCT

1. (Amended) A method of cultivating a fruit vegetable plant, the method comprising:
cultivating at least two parts of a plurality of ground parts generated from one plant seedling of the fruit vegetable plant in different environments,
wherein the plurality of ground parts of the fruit vegetable plant comprises a main branch and a side branch, and
the main branch and at least one side branch are cultivated in different environments.

2. The method of cultivating a fruit vegetable plant according to claim 1,
wherein the different environments differ in one or more conditions selected from temperature, relative humidity, light, carbon dioxide concentration, and air flow.

3. (Canceled).

4. (Amended) The method of cultivating a fruit vegetable plant according to claim 1 or 2,
wherein the different environments comprise a fruit growth promoting environment at least including a fruit enlargement promoting environment, and a photosynthesis promoting environment,
in the fruit enlargement promoting environment, one or more conditions selected from temperature, relative humidity, light, carbon dioxide concentration, and air flow are set as conditions suitable for promoting fruit growth of the fruit vegetable plant, and
in the photosynthesis promoting environment, one or more conditions selected from temperature, relative humidity, light, carbon dioxide concentration, and air flow are set as conditions suitable for promoting photosynthesis of the fruit vegetable plant.

5. (Amended) The method of cultivating a fruit vegetable plant according to claim 4,
wherein a part of the fruit vegetable plant cultivated in the fruit growth promoting environment or the photosynthesis promoting environment is accommodated in an accommodation portion.

6. (Amended) The method of cultivating a fruit vegetable plant according to claim 4 or 5,
wherein a light period temperature in the fruit enlargement promoting environment is different from a light period temperature in the photosynthesis promoting environment, and
the light period temperature in the fruit enlargement promoting environment is 15°C to 25°C, and the light period temperature in the photosynthesis promoting environment is 25°C to 30°C.

7. (Amended) The method of cultivating a fruit vegetable plant according to any one of claims 4 to 6,
wherein the plurality of ground parts of the fruit vegetable plant comprise two or more side branches,
at least two of the main branches and the side branches are cultivated in the photosynthesis promoting environment, and
in the photosynthesis promoting environment, a light-dark cycle of light irradiation is controlled, and at least one of the main branch or the side branch is allowed to stay in the light period.

8. (Amended) The method of cultivating a fruit vegetable plant according to any one of claims 4 to 7,
wherein the plurality of ground parts of the fruit vegetable plant comprise two or more side branches,
at least two of the main branches and the side branches are cultivated in the fruit growth promoting environment.

9. (Amended) The method of cultivating a fruit vegetable plant according to any one of claims 4 to 8,
wherein in the photosynthesis promoting environment, an area of a leaf comprised in at least one of the main branch or the side branch is adjusted.

10. (Amended) The method of cultivating a fruit vegetable plant according to any one of claims 4 to 9,
wherein in the photosynthesis promoting environment, flower buds comprised in at least one of the main branch or the side branch are removed.

11. (Amended) The method of cultivating a fruit vegetable plant according to any one of claims 4 to 10,
wherein the fruit growth promoting environment further includes at least one of a flowering promoting environment or a fruit ripening environment,
in the flowering promoting environment, one or more conditions selected from temperature, relative humidity, light, carbon dioxide concentration, and air flow are set as conditions suitable for promoting flowering of the fruit vegetable plant, and
in the fruit ripening environment, one or more conditions selected from temperature, relative humidity, light, carbon dioxide concentration, and air flow are set as conditions suitable for ripening of a fruit of the fruit vegetable plant.

12. (Amended) The method of cultivating a fruit vegetable plant according to claim 11,
wherein parts of the fruit vegetable plant cultivated in the fruit enlargement promoting environment, the flowering promoting environment, and the fruit ripening environment are accommodated in different accommodation portions.

13. (Amended) The method of cultivating a fruit vegetable plant according to any one of claims 1 to 2 and claims 4 to 12,
wherein an artificial light irradiation device is used as a light source.

14. (Amended) The method of cultivating a fruit vegetable plant according to any one of claims 1 to 2 and claims 4 to 13,
wherein the fruit vegetable plant is a Solanaceae family plant.

15. (Amended) The method of cultivating a fruit vegetable plant according to any one of claims 1 to 2 and claims 4 to 14,
wherein the fruit vegetable plant is a tomato.

16. (Canceled).

17. (Amended) The method of cultivating a fruit vegetable plant according to claim 15,
wherein the tomato fruit obtained by the method of cultivating a fruit vegetable plant according to claim 15 comprises 15 mg/100 g or more of lycopene and has a Brix sugar content of 5% by mass or more.
